(19) Europäisches Patentamt
European Patent Office
Office européen des brevets

(11) **EP 3 330 868 A1**

(12) **EUROPEAN PATENT APPLICATION**

(43) Date of publication:
06.06.2018 Bulletin 2018/23

(51) Int Cl.:
*G06F 17/30* (2006.01)     *G06K 9/62* (2006.01)

(21) Application number: 16202205.7

(22) Date of filing: 05.12.2016

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **British Telecommunications public limited company**
**London EC1A 7AJ (GB)**

(72) Inventor: **The designation of the inventor has not yet been filed**

(74) Representative: **British Telecommunications public limited company**
**Intellectual Property Department**
**Ground Floor, Faraday Building**
**1 Knightrider Street**
**London EC4V 5BT (GB)**

(54) **CLUSTERING APPARATUS AND METHOD**

(57)    Apparatus for clustering a plurality of entities or events, the apparatus comprising one or more processors (200) configured to: receive a data set (214) representing the plurality of entities or events, the data set (214) specifying, for each entity or event in the plurality of entities or events, a value of each attribute in a plurality of attributes; acquire a first partition, wherein the first partition groups the entities or events according to the values for the entities or events of a first subset of the attributes; and, using the first partition, determine a second partition, wherein the second partition groups the entities or events according to the values for the entities or events of a second subset of the attributes, and wherein the first subset is different to the second subset.

## FIGURE 2

FUZZY CLASSIFICATION APPARATUS 200

INPUT 212
DATASET 214
EQUIVALENCE CLASS INFORMATION 216

PROCESSOR 202
CLASSIFICATION MODULE 204
LATTICE GENERATION MODULE 206
LATTICE PROCESSING MODULE 208
PARTITION DETERMINATION MODULE 210

OUTPUT 218

**Description**

Field of the Invention

The present invention relates generally to data clustering and, in particular, to clustering of a plurality of entities or events.

Background of the Invention

When analysing data such as access records, travel logs and other data relevant to physical security such as building security, it is generally desirable to simplify the data by finding groups or clusters of similar entities. For example, a group may include employees with similar movements, buildings with similar access patterns, etc. Notably, similar considerations apply when dealing with logical or virtual entities such as networked computer systems, terminals, cellular telephones, smartphones, software processes, applications and the like, software agents, etc.

Identifying such groups can be seen as form of clustering. Clustering is a popular approach to classifying and structuring data in which groups of objects are identified that have some common properties. Clustering is a standard technique in data analysis, data mining and machine learning.

Formal Concept Analysis (FCA) is another standard data analysis technique used to group objects into related sets on the basis of their attribute values. FCA is a method of extracting structure from data sets in object-attribute-value format.

Often attributes having numerical values and an underlying scale of measurement are chosen to calculate similarity since comparison is relatively straightforward in either a binary (yes/no) or a graded fashion.

Fuzzy set theory has been proposed as an alternative to numerical scaling. Fuzzy set theory is a well-established approach to modelling uncertainty, with numerous successful applications. Its main advantage is the ability to handle definitions of terms and sets without having to give strict yes/no boundaries.

Summary of the Invention

In many cases there are meaningful similarities between attribute values which do not have an underlying numerical ordering such as the IDs of employees in equivalent or closely-related roles, buildings which are used for similar purposes, etc. The present inventor has realised that if two attributes are related to some extent, the fuzzy partitions of data with respect to those attributes should be similar. Thus, the present inventor has realised that if one attribute is numerical and a data set has been clustered based on that numerical attribute, it tends to be possible to derive a consistent set of fuzzy categories for a different, e.g. non-numerical, attribute. The present invention provides a method and apparatus for, given a graded partition of a set of objects (i.e. entities) or events, typically arising from a fuzzy similarity relation over a specified set of their attributes, finding a commensurable similarity relation over a different set of attributes.

The present inventor has realised that grouping entities or events in a different way, for example with respect to non-numerical attributes as opposed to numerical attributes, may improve the mining of information from data sets representing the objects/events. This may lead to a better understanding of current behaviour, predicting future behaviour and identifying non-standard patterns and possible security breaches.

In a first aspect, the present invention provides apparatus for clustering a plurality of entities or events. The entities may be physical entities, objects or items, such as devices, people, or buildings. The events may be behaviours, actions, changes, or other occurrences relating to one or more physical entities. The apparatus comprises one or more processors configured to: receive a data set representative of the plurality of entities or events and specifying a plurality of attributes of the entities or events, wherein the data set includes, for each entity or event in the plurality of entities or events, a value of each attribute; acquire a first partition, wherein the first partition groups the entities or events according to the values for the entities or events of a first subset of the attributes; and, using the first partition, determine a second partition, wherein the second partition groups the entities or events according to the values for the entities or events of a second subset of the attributes, and wherein the first subset is different to the second subset.

The events may be physical or network security events, i.e. events that relate to physical or network security. For example, the events may include time-stamped events relating to people accessing resources using a security facility, such as access to a secure building via a badge-locked door, or access to a secure network via an authentication system.

The attributes may be physical or network security attributes, i.e. attributes that relate to physical or network security. For example, the attributes may include a building access control parameter, and/or a parameter relating to access to a secure network via an authentication system.

Preferably, there is at least one attribute in the first subset that is not in the second subset, and there is at least one attribute in the second subset that is not in the first subset. More preferably, the first subset and the second subset are disjoint subsets having no common attributes.

The one or more processors may be further configured to perform a further process using the second partition of the data set, for example but not limited to a data mining process, a statistical data analysis process, a machine learning process, a pattern recognition process, an image analysis process, an information retrieval process, and a security event analysis process.

The first partition may be a fuzzy partition groups that specifies, for each entity or event and for each group in the first partition, a membership value of that entity or event in that group. The one or more processors may be configured to: using the first partition, determine graded equivalence classes for the entities or events at a plurality of different membership levels; determine a lattice structure representative of a hierarchy of the equivalence classes; and, using the determined lattice structure, determine the second partition. The one or more processors may be configured to determine x-mu reduced labelling for the graded equivalence classes, and determine the lattice structure using the determined x-mu reduced labelling. The one or more processors may be configured to project the lattice structure onto the attributes in the second subset, thereby producing a further lattice structure, and, using the further lattice structure, determine the second partition. The one or more processors may be configured to project the lattice structure onto the attributes in the second subset by, for each entity or event, replacing all occurrences of that entity or event in the lattice structure with the attribute values of the second subset of attributes of that entity or event. The one or more processors may be configured to: determine, for each equivalence class defined by the further lattice structure, a confidence value; for each equivalence class defined by the further lattice structure, compare the confidence value determined for that equivalence class to a threshold value; and remove, form the further lattice structure, each equivalence class of the further lattice structure that has a confidence value below the threshold value.

The apparatus may further comprise a user interface. The one or more processors may be configured to receive the threshold value from the user interface.

The first subset may include one or more attributes having numerical values. The second subset may include one or more attributes having non-numerical values. The attributes in the first subset may be commensurable with the attributes in the second subset.

In a further aspect, the present invention provides a method for clustering a plurality of entities or events. The method comprises: receiving a data set representative of the plurality of entities or events and specifying a plurality of attributes of the entities or events, wherein the data set includes, for each entity or event in the plurality of entities or events, a value of each attribute; acquiring a first partition, wherein the first partition groups the entities or events according to the values for the entities or events of a first subset of the attributes; and, using the first partition, determining a second partition, wherein the second partition groups the entities or events according to the values for the entities or events of a second subset of the attributes, and wherein the first subset is different to the second subset.

In a further aspect, the present invention provides a program or plurality of programs arranged such that when executed by a computer system or one or more processors it/they cause the computer system or the one or more processors to operate in accordance with the preceding aspect.

In a further aspect, the present invention provides a machine readable storage medium storing a program or at least one of the plurality of programs according to the preceding aspect.

Brief Description of the Drawings

A preferred embodiment of the present invention will now be described, by way of example only, with reference to the accompanying drawings, in which:

Figure 1 is a schematic illustration (not to scale) of a computer system;

Figure 2 is a schematic illustration (not to scale) of a classification apparatus;

Figure 3 is a process flow chart showing certain steps of an example fuzzy classification process performable by the classification apparatus;

Figure 4 is schematic illustration (not to scale) showing an example fuzzy formal concept analysis lattice;

Figure 5 is schematic illustration (not to scale) showing a lattice resulting from projecting the lattice of Figure 4 onto a different set of abject attributes;

Figure 6 is schematic illustration (not to scale) showing a lattice resulting from processing the lattice of Figure 5; and

Figure 7 is a process flow chart showing certain steps of a further example fuzzy classification process performable by the classification apparatus.

Detailed Description of the Preferred Embodiments

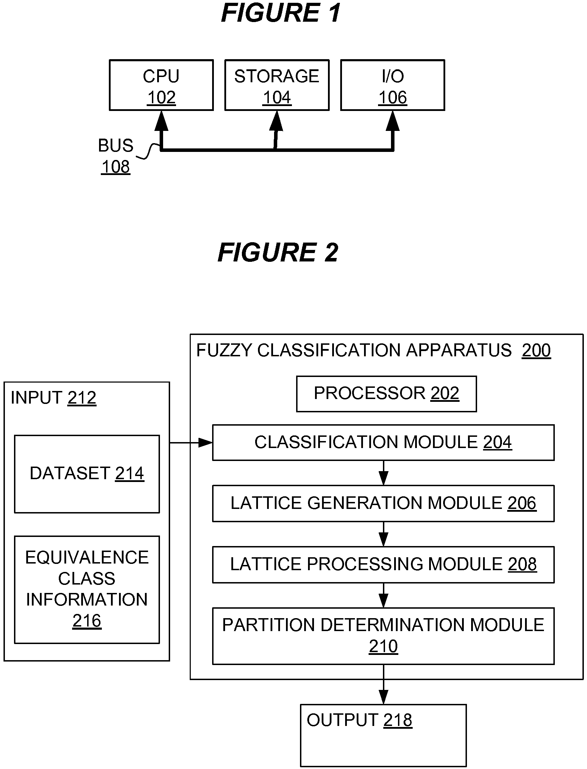

Figure 1 is a schematic illustration (not to scale) of a computer system suitable for the operation of embodiments of the present invention. A central processor unit (CPU) 102 is communicatively connected to a storage 104 and an input/output (I/O) interface 106 via a data bus 108. The storage 104 can be any read/write storage device such as a random access memory (RAM) or a non-volatile storage device. An example of a non-volatile storage device includes a disk or tape storage device. The I/O interface 106 is an interface to devices for the input or output of data, or for both input and output of data. Examples of I/O devices connectable to I/O interface 106 include a keyboard, a mouse, a display (such as a monitor) and a network connection.

Figure 2 is a component diagram of a classification apparatus 200 for generating a set of groups, or clusters, of entities (or objects) based on attributes of those entities, in accordance with a preferred embodiment of the present invention.

Illustrative examples of entities, objects or items that are grouped by the classification apparatus 200, and of the attributes of those entities, are provided later below.

The classification apparatus 200 comprises a processor 202, a classification module 204, a lattice generation module 206, a lattice processing module 208, and a partition determination module 210.

In this embodiment, the modules 204-210 (i.e. the classification module 204, the lattice generation module 206, the lattice processing module 208, and the partition determination module 210) correspond to functions and algorithms which are implemented in software. The software may consist of computer executable instructions stored on a computer readable media such as a memory or other type of storage device which may include one or more storages such as storage 104 of a generalised computing device such as that depicted in Figure 1. The term "computer readable media" is also used to represent any means by which the computer readable instructions may be received by a computer.

In some embodiments, the modules 204-210 may be software, hardware, firmware, or any combination thereof. Multiple functions may be performed in one or more modules as desired, and the embodiments described herein are merely examples.

In this embodiment, the software corresponding to the modules 204-210 is executed on the processor 202. The processor 202 is configured to undertake all or part of the function of the classification apparatus 200. Apparatus, including the processor 202, for implementing the classification apparatus 200, and performing the method steps to be described later below, may be provided by configuring or adapting any suitable apparatus, for example one or more computers or other processing apparatus or processors, and/or providing additional modules. The apparatus may comprise a computer, a network of computers, or one or more processors, for implementing instructions and using data, including instructions and data in the form of a computer program or plurality of computer programs stored in or on a machine readable storage medium such as computer memory, a computer disk, ROM, PROM etc., or any combination of these or other storage media. For example, the processor 202 can be one or more CPUs such as CPU 102 of a generalised computing device such as that depicted in Figure 1. Accordingly the particular embodiments depicted herein are purely exemplary and any suitable configuration of components could alternatively be employed.

In this embodiment, the classification module 204 is configured to receive an input 212. The input 212 comprises a data set 214 and equivalence class information 216. Illustrative examples of the data set 214 and equivalence class information 216 are provided later below.

Preferably, the data set 214 is in object-attribute-value form, for example, in the form of an object-attribute-value model. The data set 214 can be in the form of, for example, a data structure, table, database, or similar. For example, the data set 214 can be in the form of a table with each row of the table corresponding to an object (i.e. an entity or an item) (i.e. each row is a data point), and each column corresponding to an attribute. Each cell of the table may record a value of the attribute corresponding to its column for the object corresponding to its row. Example attributes that may be defined in the table include, but are not limited to, parameters associated with the objects. The data set 214 can be specified by a component or entity external to the classification apparatus 200, for example, the data set 214 may be specified by a user of the classification apparatus 200 using an appropriate user interface of the classification apparatus 200 which may include one or more I/O interfaces such as I/O interface 106 of a generalised computing device such as that depicted in Figure 1.

In this embodiment, the equivalence class information 216 defines a fuzzy similarity relation between the objects defined in the data set 214. This fuzzy similarity relation may be defined with respect to one or more of the attributes defined in the data set 214. The equivalence class information 216 may be provided as a discrete set of membership levels that define a fuzzy similarity relation according to, for example, some function of one or more attribute values. The equivalence class information 216 can be specified by a component or entity external to the classification apparatus 200, for example, the equivalence class information 216 may be specified by a user of the classification apparatus 200 using an appropriate user interface of the classification apparatus 200 which may include one or more I/O interfaces such as I/O interface 106 of a generalised computing device such as that depicted in Figure 1.

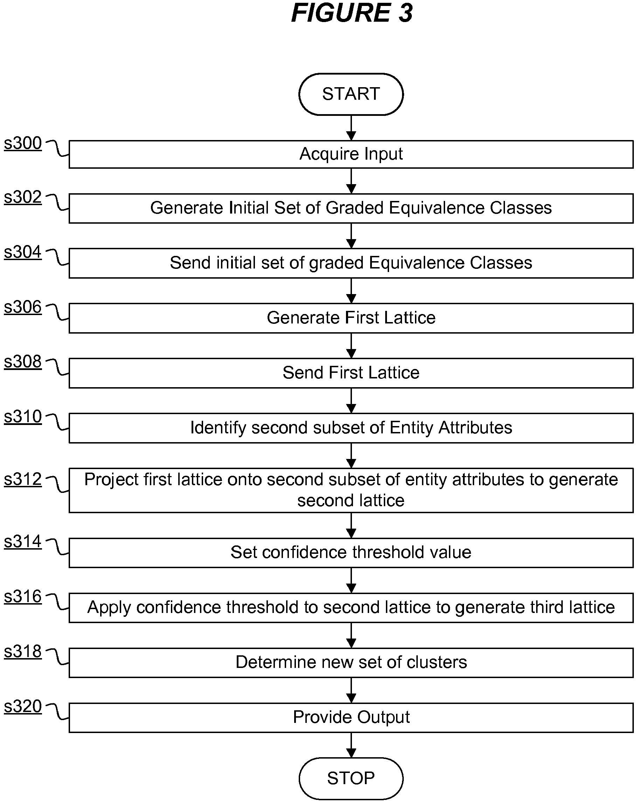

The classification module 204 is configured to process the received input 212 and to evaluate an initial set of graded equivalence classes for the data set 214 based on the equivalence class information 216. Operation of the classification module 204 is described in more detail later below with reference to Figure 3. The initial set of graded equivalence classes determined by the classification module 204 indicates groups of attribute values that can be considered equivalent (e.g. approximately identical at some membership level), as well as groups which can be treated as linked but not equivalent. In particular, in this embodiment, the classification module 204 is configured to form, based on a subset of attributes, an initial set of fuzzy clusters of objects that are specified in the data set 214. The initial fuzzy clusters are defined based on the equivalence class information 216. Thus, an initial hierarchical fuzzy partition of the objects represented in the data set 214 is determined by the classification module 204 based on a subset of the objects' attributes.

In some embodiments, classification module 204 evaluates the initial set of fuzzy clusters using fuzzy Formal Concept Analysis (FCA). Formal Concept Analysis (FCA) is a method of extracting structure from data sets in object-attribute-value format. Further information on FCA may be found in, for example, "Formal Concept Analysis: Methods and Applications in Computer Science" (Bernhard Ganter and Gerd Stumme, 2003). Fuzzy FCA is an approach to forming meaningful groups of data represented as one or more fuzzy relations. In implementing fuzzy FCA, the x-mu representation of fuzzy sets may be employed. The x-mu representation may be as described in "The X-mu Approach: Fuzzy Quantities, Fuzzy Arithmetic and Fuzzy Association Rules" (Trevor Martin and Ben Azvine, IEEE, 2013) and "The X-mu Representation of Fuzzy Sets - Regaining the Excluded Middle" (Trevor Martin and Ben Azvine, IEEE, 2013). The x-mu approach uses a crisp cut-off point between membership and non-membership of a set while allowing this crisp cut-off point to vary. Thus all properties of crisp methods are retained. In general x-mu values are represented by analytic functions mapping membership to value.

The classification module 204 is coupled to the lattice generation module 206 such that an output of the classification module 204, i.e. the initial set of fuzzy clusters, may be sent from the classification module 204 to the lattice generation module 206.

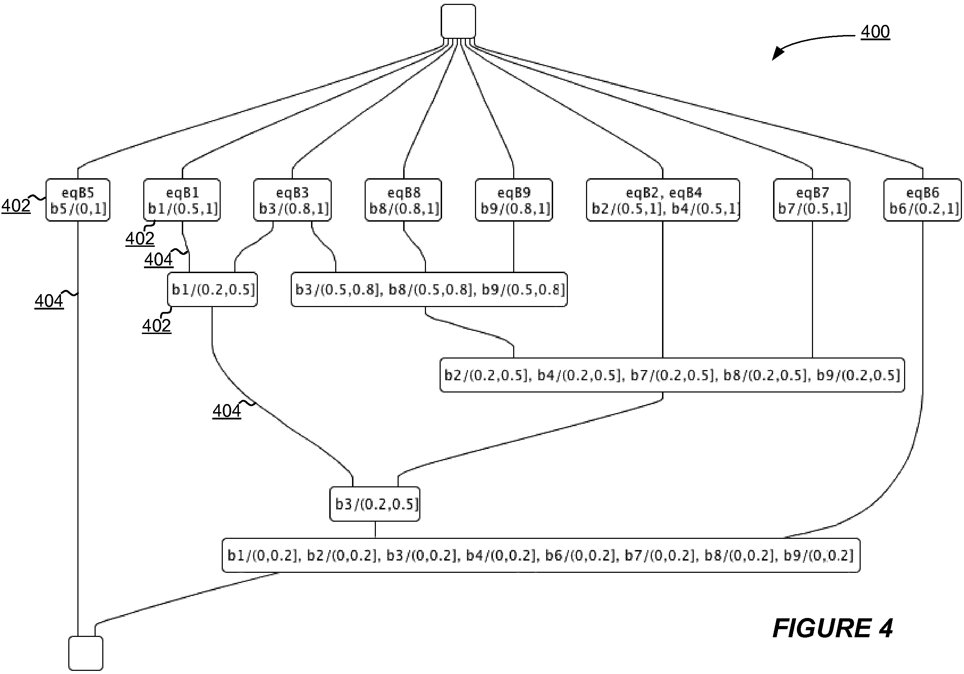

The lattice generation module 206 is configured to generate a lattice of equivalence classes based on the initial set of fuzzy clusters received from the classification module 204. The terminology "lattice" is used conventionally herein, and refers to a mathematical structure which represents a partially ordered set of objects. This lattice generated by the lattice generation module 206 is hereinafter referred to as the "first lattice". The first lattice and its construction by the lattice generation module 206 is described in more detail later below with reference to Figure 3. The lattice generation module 206 may implement fuzzy FCA in the formation of the first lattice. An illustrative example of the first lattice is provided in Figure 4 and described in more detail later below.

The lattice generation module 206 is coupled to the lattice processing module 208 such that an output of the lattice generation module 206, i.e. the first lattice, may be sent from the lattice generation module 206 to the lattice processing module 208.

The lattice processing module 208 is configured to process the first lattice received from the lattice generation module 206. Processing of the first lattice by the lattice processing module 208 is described in more detail later below with reference to Figure 3.

In this embodiment, the first lattice is representative of the initial fuzzy context for the objects specified in the data set 214 arising from the similarity relationship defined in the equivalence class information 216 and based on a first subset of the object attributes. In other words, the first lattice represents the initial set of fuzzy clusters determined by the classification module 204 based on the first subset of the object attributes. The lattice processing module 208 is configured to process the first lattice including projecting the first lattice onto second subset of the object attributes, wherein the second subset of attributes is different to the first subset. In this embodiment, the first and second subsets of attributes are non-overlapping. This processing of the first lattice results in a new lattice, hereinafter referred to as the "second lattice". As described in more detail later below with reference to Figure 3, the lattice processing module 208 is further configured to process the second lattice to account for an association confidence between the first and second subsets of attributes. This further processing results in a new lattice, hereinafter referred to as the "third lattice". The third lattice represents a hierarchical partition of the data in the data set 214, which is consistent with that defined by the first lattice, but is defined with respect to the second subset of object attributes.

The lattice processing module 208 is coupled to the partition determination module 210 such that an output of the lattice processing module 208, i.e. the third lattice, may be sent from the lattice processing module 208 to the partition determination module 210.

The partition determination module 210 is configured to process the received third lattice, and to determine therefrom an output 218. The output 218 is a partition for the data set 214. In particular, in this embodiment, the partition determination module 210 determines a new set of clusters or groups for the data in the data set 214 based upon the second subset of object attributes onto which the first lattice was projected by the lattice processing module 208.

Illustrative examples of the output 218 are provided later below. The output 218 can be in the form of, for example, a data structure, table, database, or similar. The classification apparatus 200 can provide the output 218 for use by a component or entity external to the classification apparatus 200, for example, the output 218 may be displayed to a user of the classification apparatus 200 using an appropriate user interface of the classification apparatus 200 and/or the output 218 may be stored in a storage 104 of a computer system, such as a storage associated with or comprised in the classification apparatus 200.

In some embodiments, some or all of the functions and algorithms of the modules 204-210 are implemented as a virtual machine which is run by the processor 200. The implementation of the virtual machine may involve specialized hardware, software, or a combination thereof.

Figure 3 is a process flow chart showing certain steps of an example classification process performed by the classification apparatus 200 to partition a plurality of entities (i.e. objects).

The entities that are partitioned or clustered by the classification apparatus 200 are physical entities, objects, devices or people. In particular, in this embodiment the entities are buildings. In this embodiment, the attributes of the entities are physical or network security attributes, i.e. attributes that relate to physical or network security. Examples of physical or network security attributes include but are not limited to building access control, access to a secure network via an authentication system, etc.

In some embodiments, the classification apparatus 200 partitions a plurality of events instead of or in addition to the entities. In other words, the data set processed by the classification apparatus 200 specifies or represents a plurality of events, and attributes for those events. Events may indicate a behaviour, action, change or other occurrence relating to a physical entity. In some embodiments, the events are physical or network security events, i.e. events that relate to physical or network security. Also, the attributes of the events may relate to physical or network security. For example, the events may be time-stamped events relating to people accessing resources using a security facility, such as access to a secure building via a badge-locked door, or access to a secure network via an authentication system. Such events can include an indication of a type of occurrence, such as an "entry occurrence" and an "exit occurrence" indicating commencement and cessation of access to the resource. Further, events can include an identification of a resource being accessed, such as a building or network identifier. Sequences of such events can be identified using sequence extending relations between events such as identity of employee identifier and a temporal limitation. Examples of data sets of events include, inter alia: network access logs; software monitoring logs; processing unit status information events; physical security information such as building access events; data transmission records; access control records for secured resources; indicators of activity of a hardware or software component, a resource or an individual; and profile information for profiling a hardware or software component, a resource or an individual.

The identification of groups of entities or events can be valuable in security applications where entities or events grouped with known threats can be subject to close scrutiny.

Initially, at step s300 the classification module 204 acquires the input 212.

For illustration purposes only, in this embodiment, the data set 214 comprises data related to a plurality of buildings and physical/network security attributes for those buildings. The data set 214 is shown in Table 1 below.

Table 1

| building identifier | external access control | internal access control | main use | secondary uses | daily usage profile (based here) | daily usage profile (visitors) | daily usage profile (external) |
|---|---|---|---|---|---|---|---|
| b1 | swipecard | none | admin | sales | 100 | 10 | 2 |
| b2 | cctv+ manual | cctv+ swipecard | hardware operation | | 0 | 5 | 0 |
| b3 | swipecard | none | sales | support | 50 | 10 | 10 |
| b4 | cctv+ swipecard | cctv+ swipecard | hardware operation | | 5 | 5 | 0 |
| b5 | swipecard | swipecard | admin (HQ) | sales, support | 200 | 80 | 110 |
| b6 | swipecard | none | sales | | 40 | 50 | 100 |
| b7 | cctv+ swipecard | swipecard | storage / maintenance | hardware operation | 0 | 30 | 0 |

(continued)

| building identifier | external access control | internal access control | main use | secondary uses | daily usage profile (based here) | daily usage profile (visitors) | daily usage profile (external) |
|---|---|---|---|---|---|---|---|
| b8 | swipecard | none | admin | | 40 | 10 | 5 |
| b9 | swipecard | none | support | | 30 | 5 | 10 |

The first column of Table 1 records an identifier for each of nine different buildings b1-b9. The second column of Table 1 records security measures on the external doors of the buildings b1-b9. The third column of Table 1 records security measures on the internal doors of the buildings b1-b9. The fourth column of Table 1 records a main use of the buildings b1-b9. The fifth column of Table 1 records a secondary use of the buildings b1-b9, where applicable. The sixth, seventh, and eighth columns records a usage-profile of the buildings b1-b9. In particular, the sixth column records the number of building users who are based at buildings. The seventh column records the number of building users that are not based at the buildings but that are employed by the company that uses the buildings. The eighth column records the number of building users who are external to the company.

The data set 214 shown in Table 1 may be compiled in any appropriate manner, for example, from swipe card records. The data set 214 may be acquired by the classification module 204 in any appropriate manner from any appropriate entity.

The equivalence class information 216 defines approximate equivalence of the buildings b1-b9 based on a first subset of the building attributes. For illustration purposes only, in this embodiment, the first subset of attributes is the numbers of people working in and visiting the buildings (i.e. the first subset of attributes consists of attributes in the 6th-8th columns of Table 1). The equivalence class information 216 comprises a discrete set of fuzzy membership values {0.2, 0.5, 0.8, 1]}, and defines that building usage values differing by 5 or less are deemed to be equivalent; building usage values differing by more than 5 and less than or equal to 20 are deemed to be equivalent at membership 0.8; building usage values differing by more than 20 and less than or equal to 50 are deemed to be equivalent at membership 0.5; building usage values differing by more than 50 and less than or equal to 100 are deemed to be equivalent at membership 0.2; and building usage values differing by more than 100 are deemed to not be equivalent at all.

In this example, the equivalence information 216 also specifies that the overall degree of equivalence of two buildings is the minimum of a first membership value, a second membership value, and a third membership value. The first membership value is the membership value with which those buildings are deemed to be equivalent based on a comparison of the attribute "daily usage profile (based here)" (i.e. the 6th column of Table 1). The second membership value is the membership value with which those buildings are deemed to be equivalent based on a comparison of the attribute "daily usage profile (visitors)" (i.e. the 7th column of Table 1). The third membership value is the membership value with which those buildings are deemed to be equivalent based on a comparison of the attribute "daily usage profile (external)" (i.e. the 8th column of Table 1). For example, in comparing buildings *b2* and *b3*, a comparison of the attribute values in the 6th column (0 compared to 50) yields a first membership value of 0.5, a comparison of the attribute values in the 7th column (5 compared to 10) yields a second membership value of 1, and a comparison of the attribute values in the 8th column (0 compared to 10) yields a third membership value of 0.8. The buildings *b2* and *b3* are thus deemed to be equivalent with an overall degree of equivalence equal to min(0.5, 1, 0..8) = 0.5.

It will be appreciated by those skilled in the art that in other embodiments a different fuzzy similarity relation may be specified by the equivalence class information 216.

The equivalence class information 216 may be compiled in any appropriate manner, for example, by a user of the fuzzy calculation apparatus 200 using expert knowledge. The equivalence class information 216 may be acquired by the classification module 204 in any appropriate manner from any appropriate entity.

At step s302, the classification module 204 processes the received input 212 and determines an initial set of fuzzy clusters for the buildings b1-b9 based on the first subset of the attribute values. In this embodiment, the classification module 204 uses each of the buildings b1-b9 as a basis to define a fuzzy cluster (i.e. an initial graded equivalence class). The fuzzy clusters are defined using the discrete set of membership levels comprised in the equivalence class information 216. It will be appreciated by those skilled in the art that the initial fuzzy clusters may be based on some cluster centre other than the buildings themselves. For example, in some embodiments, the initial graded equivalence classes may be defined with respect to core points (i.e. "cluster centres") which may, for example, be determined using standard clustering methods such as k-means clustering of fuzzy c-means clustering.

The fuzzy clusters determined by the classification module 204 in this embodiment are shown in Table 2 below. Using terminology consistent with fuzzy FCA, Table 2 shows the initial fuzzy context for the buildings b1-b9 arising from the similarity relation defined in the equivalence class information 216.

Table 2

|     | eqB1 | eqB2 | eqB3 | eqB4 | eqB5 | eqB6 | eqB7 | eqB8 | eqB9 |
|-----|------|------|------|------|------|------|------|------|------|
| b1  | 1    | 0.2  | 0.5  | 0.2  | 0    | 0.2  | 0.2  | 0.2  | 0.2  |
| b2  | 0.2  | 1    | 0.5  | 1    | 0    | 0.2  | 0.5  | 0.5  | 0.5  |
| b3  | 0.5  | 0.5  | 1    | 0.5  | 0    | 0.2  | 0.5  | 0.8  | 0.8  |
| b4  | 0.2  | 1    | 0.5  | 1    | 0    | 0.2  | 0.5  | 0.5  | 0.5  |
| b5  | 0    | 0    | 0    | 0    | 1    | 0    | 0    | 0    | 0    |
| b6  | 0.2  | 0.2  | 0.2  | 0.2  | 0    | 1    | 0.2  | 0.2  | 0.2  |
| b7  | 0.2  | 0.5  | 0.5  | 0.5  | 0    | 0.2  | 1    | 0.5  | 0.5  |
| b8  | 0.2  | 0.5  | 0.8  | 0.5  | 0    | 0.2  | 0.5  | 1    | 0.8  |
| b9  | 0.2  | 0.5  | 0.8  | 0.5  | 0    | 0.2  | 0.5  | 0.8  | 1    |

In Table 2, each column records the degree to which each of the buildings (i.e. rows) are equivalent to a respective building based on the profile of building usage values. Thus, the column "eqB1" records the degree to which the buildings b1-b9 are equivalent to building b1 based on the first subset of attributes (i.e. the values in the 6th-8th columns of Table 1). Similarly, the column "eqB2" records the degree to which the buildings b1-b9 are equivalent to building b2 based on the values in the 6th-8th columns of Table 1, and so on. The content of each cell in the context (Table 2) is the similarity grade of the building (row) to the category (column), as defined by the equivalence class information 216.

At step s304, the classification module 204 sends the determined initial set of fuzzy clusters (i.e. Table 2) to the lattice generation module 206.

At step s306, the lattice generation module 206 generates a fuzzy FCA lattice for the fuzzy concepts in Table 2. That is to say, the lattice generation module 206 generates the first lattice.

Figure 4 is schematic illustration showing the first lattice 400 generated from Table 2.

In this embodiment, any appropriate method of generating the first lattice 400 may be implemented. For example, the first lattice 400 may be constructed in accordance with the process described in "Formal Concept Analysis: Mathematical Foundations", Springer, 1998 (Bernhard Ganter and Rudolf Wille), and "Formal Concept Analysis: Methods and Applications in Computer Science" (Bernhard Ganter and Gerd Stumme, 2003).

In the first lattice 400, the equivalence classes (also called "concepts") are indicated as solid line boxes, examples of which are indicated in Figure 4 by the reference numeral 402. The concepts 402 of the first lattice 400 each comprise an "extension", which is a set of one or more objects, i.e. buildings b1-b9. The concepts 402 of the first lattice 400 also each comprise an "intension", which is a set of one or more attributes, each attribute being associated with a respective set of objects in that concept 402.

In the first lattice 400, the notation e/m is used to denote an "object/membership interval" pair, where the objects are buildings. For example, b1/(0.5,1] in a concept 402 denotes the building b1 having an associated membership (0.5, 1] within that concept 402. The membership interval arises from the use of the x-mu approach, which is described in more detail earlier above, in which we consider a crisp lattice which varies according to the membership level considered. The interval (0.5, 1) indicates that the building b1 is in the extension of this concept whenever the considered membership lies in the range (0.5, 1]. Below membership 0.5, the concept has an empty extension and is omitted from the crisp lattice.

In the first lattice 400, the concepts 402 are linked by inclusion. That is to say, parent concepts 402 are located in the lattice drawing above child concepts. Parent and child concepts 402 are linked by solid lines, examples of which are indicated in Figure 4 by the reference numeral 404. A parent concept 402 contains at least every object in its child concepts 402. Also, each child concept includes at least all the attributes of its ancestor concepts.

In the first lattice 400, reduced fuzzy labelling is used in which an attribute is listed within a single concept 402, and also applies to all concepts directly or indirectly below that concept 402. Thus, all attributes (contained within the concept boxes 402) apply to the concept 402 in which that attribute occurs as well as all its descendant concepts. Conversely, an object b1-b9 belongs to the concept 402 where it is listed, and to all parent and ancestor concepts of that concept 402.

In the first lattice 400, x-mu reduced labelling is used for the graded equivalence classes. A reduced label is a set of attributes (possibly empty) called the "reduced intent", and a set of objects, called the "reduced extent", with membership intervals. An interpretation of the membership interval is that each object in the reduced extent belongs to this concept (and to its ancestors) at any membership within the interval, i.e. the object is considered equivalent (to the degree specified by membership) to all other objects in the concept.

For each object in a given concept 402, the upper bound of its x-mu membership interval in that concept 402 is the minimum membership of that object in any parent concepts of that concept 402. Also, the lower bound of its x-mu membership interval in that concept 402 is the maximum membership in any child concept of that concept 402.

If, for an object in a concept 402, the upper and lower bounds of the x-mu membership interval for that object in that concept 402 are equal, the membership interval is empty and that object is not listed in that concept 402.

Advantageously, the reduced fuzzy labelling can be efficiently computed, for example, using standard algorithms for reduced labelling in non-fuzzy formal concepts. Advantageously, the reduced fuzzy labelling tends to provide that, for a given membership level, each object is listed in exactly one place/concept in a lattice. Also, the reduced fuzzy labelling tends to provide that all of the objects listed in the same place/concept on a lattice are equivalent. This advantageously tends to facilitate extraction of the equivalence classes.

At step s308, the lattice generation module 206 sends the determined first lattice 400 to the lattice processing module 206.

At step s310, the lattice processing module 206 acquires an identification of one or more different attributes of the buildings b1-b9, i.e. the second subset of attributes. In this embodiment, the second subset of object attributes is non-overlapping with the first subset of object attributes. In this embodiment, the second subset of attributes includes attributes other than the numbers of people working in and visiting the buildings (i.e. other than the 6th-8th columns of Table 1).

Preferably, the attributes in the second subset are commensurable with the attributes in the first subset (which specified the similarity relation in the equivalence class information 216). The term "commensurable" is used herein to refer to attributes that are measurable or comparable by a common standard. For example, a first subset of attributes may be regarded as commensurable with the second subset of attributes if a membership grade in a category built on the first subset of attributes is equivalent to the same membership grade in a different category built on the second subset of attributes.

For illustrative purposes, in this embodiment, the second subset of attributes includes the building access control attributes, i.e. the 2nd and 3rd columns of Table 1.

The lattice processing module 206 may acquire the identification of the second subset of attribute by any appropriate method. For example, the identification may be received from the user of the classification apparatus 200 via an appropriate user interface of the classification apparatus 200 which may include one or more I/O interfaces such as I/O interface 106 of a generalised computing device such as that depicted in Figure 1.

At step s312, the lattice processing module 206 projects the first lattice 400 onto the second subset of attributes. In this embodiment, this projection is performed by the lattice processing module 206 replacing each of the objects (i.e. buildings b1-b9) in the first lattice 400 with that object's attribute value of the second subset of attributes. The resulting lattice is hereinafter referred to as the "second lattice".

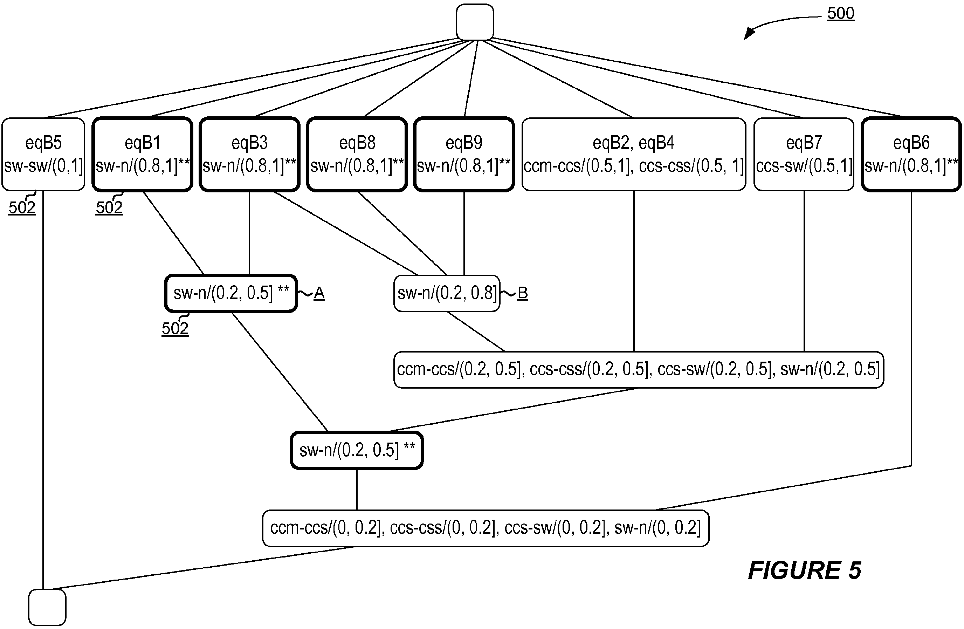

Figure 5 is schematic illustration showing the second lattice 500 resulting from the projection of the first lattice 400 onto the attributes in the 2nd and 3rd columns of Table 1. Concepts of the second lattice 500 are indicated in Figure 5 by boxes, and certain example concepts are indicated by the reference numeral 502.

In the second lattice 500 and in the following discussion, the notation *a-b* is used to denote an external-internal access control pair, with a specifying security measures on the external doors of a building, and b specifying security measures on the internal doors of that building. Also, for convenience, the "swipecard" control system is abbreviated to "sw"; the "CCTV + manual" control system is abbreviated to "ccm"; the "CCTV + swipecard" control system is abbreviated to "ccs"; and the presence of no control system (i.e. a "none" value in Table 1) is abbreviated to "n".

In this embodiment, the building access control attributes for building b1 are "swipecard" and "none" for external and internal door control respectively. Thus, at step s310, to form the second lattice 500, the lattice processing module 206 replaces all occurrences of b1 in the first lattice 400 with the entry "sw-n". Similarly, the lattice processing module 206 replaces all occurrences of b2 in the first lattice 400 by "ccm-ccs", replaces all occurrences of b3 in the first lattice 400 by "sw-n", replaces all occurrences of b4 in the first lattice 400 by "ccs-ccs", and so on for the remaining buildings b5-b9.

At step s314, the lattice processing module 206 acquires a threshold value. In this embodiment, the threshold is for applying to determined confidence values, as described in more detail later below.

The lattice processing module 206 may acquire the threshold value in any appropriate way. For example, the threshold value may be received from the user of the classification apparatus 200 via an appropriate user interface of the classification apparatus 200 which may include one or more I/O interfaces such as I/O interface 106 of a generalised computing device such as that depicted in Figure 1. In some embodiments, the confidence threshold value may be based on, for example, the expert judgement of a user of the classification apparatus 200. The confidence threshold value may be based on a subjective assessment, e.g. by the user.

The threshold value is a value within a normalised range [0, 1]. For illustrative purposes, in this embodiment, a confidence value of 0.4 is used.

The threshold value may be stored by the classification apparatus 200 such as in a memory or other type of storage device which may include one or more storages such as storage 104 of a generalised computing device such as that depicted in Figure 1.

At step s316, the lattice processing module 206 applies the acquired threshold value to the second lattice 500. In particular, the lattice processing module 206 determines a confidence value for each of the concepts 502 of the second lattice 500. The lattice processing module 206 then discards all concepts 502 in the second lattice 500 that that have a confidence value that is less than or equal to the threshold value specified at step s314.

A confidence value is an association confidence between two disjoint subsets of attributes and is representative of how linked the attributes in those subsets are. In this embodiment, a confidence value indicates how strongly the values of attributes in the first subset determine values of attributes in the second subset.

The following notation is useful in understanding how the lattice processing module 206 determines a confidence value.

Two disjoint (i.e. non-overlapping) sets of attributes are denoted as $\{S_1, S_2, \ldots, S_n\}$ and $\{T_1, T_2, \ldots, T_m\}$. For example, the first subset of attributes may be $\{S_1, S_2, S_3\}$ where $S_1$-$S_3$ are the attributes of the $6^{th}$-$8^{th}$ columns of Table 1 respectively. Also, the second subset of attributes may be $\{T_1, T_2\}$ where $T_1$ is *external access control* and $T_2$ is *internal access control.*

Values of the attributes $S_1, S_2, \ldots, S_n$ of an object x are denoted as $S_1(x), S_2(x), \ldots, S_n(x)$. Similarly, values of the attributes $T_1, T_2, \ldots, T_m$ of an object x are denoted as $T_1(x), T_2(x), \ldots, T_m(x)$. For example, $T_1(b1) = $ *external access control of b1* = sw.

A set of objects with specified properties can be denoted as {x | properties}. For example, the set of objects x with $S_1(x)=v_1$ and $S_2(x)=v_2$ and $\ldots S_n(x)=v_n$ is denoted as:

$$\{x \mid S_1(x)=v_1 \wedge S_2(x)=v_2 \wedge \ldots \wedge S_n(x)=v_n\}$$

For example:

$$\{x \mid S_1(x)=sw \wedge S_2(x)=n\}$$

$$= \{x \mid \text{external access control}(x) = sw \text{ AND internal access control}(x) = n\}$$

$$= \{b1, b3, b6, b8, b9\}$$

V and U are sets of values of the sets of attributes $\{S_1, S_2, \ldots, S_n\}$ and $\{T_1, T_2, \ldots, T_m\}$ respectively, i.e. $V=\{v_1, v_2, \ldots, v_n\}$ where $v_i$ is a value for $S_i$, and $U=\{u_1, u_2, \ldots, um\}$ where $u_i$ is a value for $U_i$.

In this embodiment, a confidence value is determined as the ratio of the numbers of objects with specified properties and a superset of those properties. Thus, the confidence value for the rule $V \rightarrow U$ (i.e. a measure of how strongly the values V will determine the values U) is determined by dividing the number of objects with attribute values V and U by the number of objects with attribute values V, i.e.:

$$\text{Conf}(V \rightarrow U) = \frac{\left| \{x \mid S_1(x) = v_1 \wedge \ldots S_n(x) = v_n \wedge T_1(x) = u_1 \wedge \ldots T_m(x) = u_m\} \right|}{\left| \{x \mid S_1(x) = v_1 \wedge \ldots S_n(x) = v_n\} \right|}$$

Thus, as an example, the lattice processing module 206 determines the confidence value of the concept marked with an A in Figure 5 (which represents a single object b1 within the membership range (0.2, 0.5]) as:

$$\text{Conf}(\text{usage\_profile is b1 AND b3} \rightarrow \text{sw-n}) = \frac{\left| \{b1\} \right|}{\left| \{b1, b3, b6, b8, b9\} \right|} = \frac{1}{5}$$

Also as an example, the lattice processing module 206 determines the confidence value of the concept marked with a B in Figure 5 as:

$$\text{Conf (usage\_profile is b3 AND b8 AND b9} \rightarrow \text{sw-n)} = \frac{|\{b3,b8,b9\}|}{|\{b1,b3,b6,b8,b9\}|} = \frac{3}{5}$$

The lattice resulting from the lattice processing module 206 discarding all concepts 502 of the second lattice 500 having confidence values below the threshold value is hereinafter referred to as the third lattice.

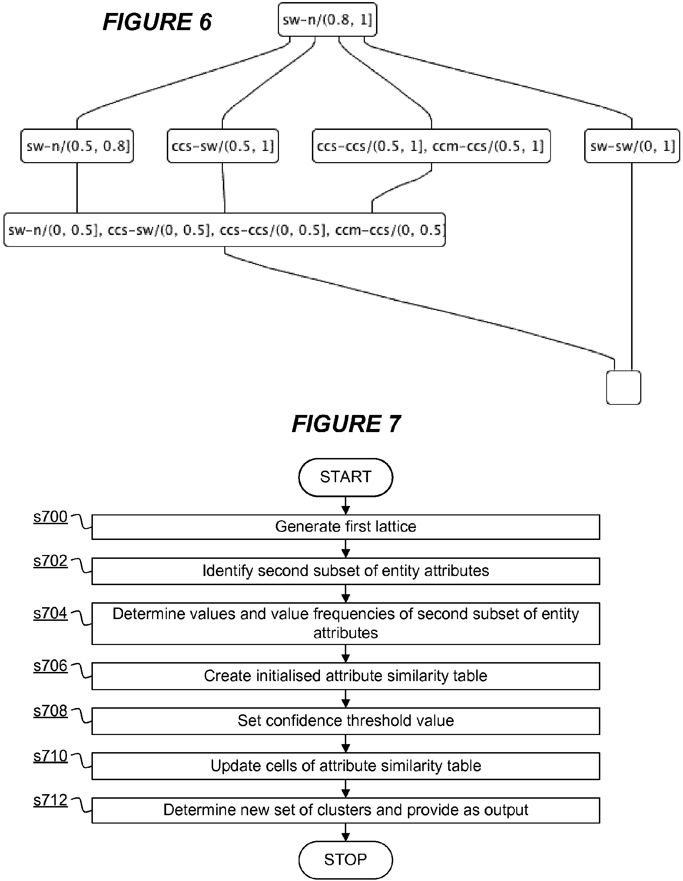

Figure 6 is schematic illustration showing the third lattice 600 in this embodiment resulting from applying a confidence threshold value of 0.4 to the second lattice 500.

Following the removal of the concepts 502 having confidence values below the 0.4 threshold value, the lattice is modified to satisfy a conventional lattice definition. For example, after discarding all concepts 502 of the second lattice 500 having confidence values below the threshold value, there was no concept containing the object sw-n/(0.8,1] and, consequently, that object is placed at the top of the third lattice 600 as the top concept. Also, the lattice is modified to form its closure and refine the reduced labelling.

At step s318, the lattice processing module 206 sends the determined third lattice 600 to the partition determination module 206.

At step s320, the partition determination module 206 determines a second fuzzy partition for the data in the data set 214 using the third lattice 600.

In particular, in this embodiment, firstly the partition determination module 206 derives or determines, from the third lattice 600, a fuzzy equivalence relation for the identified one or more different attributes (i.e. for the building access control attributes of the 2nd and 3rd columns of Table 1). Table 3 below shows, in tabular form, the fuzzy equivalence relation on the building access control attributes that is derived in this embodiment from the third lattice 600.

Table 3

|        | sw-n | ccm-ccs | ccs-ccs | ccs-sw | sw-sw |
|--------|------|---------|---------|--------|-------|
| sw-n   | 0.8  | 0.5     | 0.5     | 0.5    | 0     |
| ccm-ccs| 0.5  | 1       | 1       | 0.5    | 0     |
| ccs-ccs| 0.5  | 1       | 1       | 0.5    | 0     |
| ccs-sw | 0.5  | 0.5     | 0.5     | 1      | 0     |
| sw-sw  | 0    | 0       | 0       | 0      | 1     |

In Table 3, the rows and columns correspond to the values of the external-internal access control attribute pairs, i.e. the values that the pairs of attributes in the 2nd and 3rd columns of Table 1 may take.

In this embodiment, the fuzzy equivalence relation expressed in Table 3 is determined by, in effect, reversing the process by which the first lattice 400 was determined from Table 2. For example, the values "ccm-ccs" and " ccs-ccs" are present in a reduced concept label with membership in the interval (0.5, 1]. The upper limit of this interval is 1, hence the degree of similarity is between "ccm-ccs" and " ccs-ccs" is 1 in Table 3. Also, the immediate descendant of this concept contains "sw=n", "ccs-sw", "ccm-ccs" and " ccs-ccs", all with membership values in the interval (0, 0.5]. Thus, the degree of similarity between any pair of these values ("sw=n", "ccs-sw", "ccm-ccs" and " ccs-ccs") is 0.5 in Table 3.

Secondly, the partition determination module 206 determines one or more possible partitions of the data set 214 into approximately equivalent sets from the derived equivalence relation. Thus, in this embodiment, based on Table 3, the partition determination module 206 determines that there are three possible partitions of the data set 214, namely:

Partition 1 (at membership value 1.0):   ccm-ccs = ccs-ccs ; ccs-sw ; sw-sw
Partition 2 (at membership value 0.8):   ccm-ccs = ccs-ccs ; ccs-sw ; sw-sw ; sw-n
Partition 3 (at membership value 0.8):   ccm-ccs = ccs-ccs = ccs-sw = sw-n ; sw-sw

At step s322, the partition determination module 206 provides, as the output 218, one or more of the partitions determined at step s320.

For example, the partition determination module 206 may provide the determined partitions for use by the user via an appropriate user interface of the classification apparatus 200 which may include one or more I/O interfaces such as I/O interface 106 of a generalised computing device such as that depicted in Figure 1. In some embodiments, the partition determination module 206 stores the output 218 on an appropriate storage device of the classification apparatus 200 which may include one or more storages such as storage 104 of a generalised computing device such as that depicted in Figure 1.

Thus, an example classification process performed by the classification apparatus 200 is provided.

Advantageously, the above described apparatus and method tends to enable, given a hierarchical graded partition of objects based on some attribute values, automatic creation of a consistent hierarchical graded partition with respect to different, but commensurable or related, attributes. The above described apparatus and method tends to exploit the use of x-mu reduced labelling in fuzzy concept lattices to provide for efficient creation of the consistent hierarchical fuzzy partition. The determined partitions or clusters tend to be useful in, for example, data analysis, data mining, machine learning, and the like.

Typically, where objects have attributes that may take non-numerical (categorical) values, a clustering process of dividing them into similar groups tends to be more difficult than, say, clustering based on attributes having numerical values. In clustering based on numerical values, it tends to be relatively straight-forward to use the difference between values to indicate object similarity. The above described apparatus and method tends to overcome this difficulty of conventional methods by providing for automatic creation of a similarity relation over the non-numerical attributes based on a similarity relation over the numerical objects.

The above described method and apparatus tends to be applicable in many different fields including, but not limited to the evaluation of security rules and the like for attack detection or to determine an insecure state of system operation. Fuzzy set theory tends to be particularly useful in such fields as it provides an ability to handle definitions of terms and sets without having to give strict yes/no boundaries. For example, the notion of a network entity as malicious does not need to be given a strict boundary above which an entity is considered malicious and below which the entity is considered non-malicious. The usefulness of indistinct data is even more emphasised with more complex definitions of security threats such as "short sequence of minor alerts, closely spaced in time", where "short", "minor" and "closely" all essentially relate to indistinct data sets.

The above described method and apparatus may beneficially be used in systems that involve grouping any set of discrete entities (e.g. buildings, products, employees, etc.) into related categories, where different levels of granularity are desirable. For example, a data set may initially be split into broad groups, which may subsequently be sub-divided as part of a "drilling down" procedure. This tends to be useful in identifying anomalous cases (e.g. a high-risk building that doesn't have high security).

The above described method and apparatus may beneficially be used in systems that involve deriving clusters of approximately equal objects such as recommender and preference ranking systems.

Advantageously, the above described method and apparatus may be used to generate self-consistent fuzzy equivalence relations over different attribute sets. This may be achieved as follows. As described above, with two disjoint subsets of attributes and an initial fuzzy equivalence relation over attribute the first attribute subset, a fuzzy equivalence relation over the second attribute subset is generated. The processes is iteratively repeated, using the derived fuzzy equivalence relation over the second attribute subset to generate an updated fuzzy equivalence relation over the first attribute subset. This may be identical to the initial fuzzy equivalence relation over the first attribute subset. If so, the process has converged and we have self-consistent fuzzy equivalence relations. If not, the process can be iteratively repeated until convergence occurs. Advantageously, convergence tends to occur quickly.

It should be noted that certain of the process steps depicted in the flowchart of Figure 3 and described above may be omitted or such process steps may be performed in differing order to that presented below and shown in Figure 3. Furthermore, although all the process steps have, for convenience and ease of understanding, been depicted as discrete temporally-sequential steps, nevertheless some of the process steps may in fact be performed simultaneously or at least overlapping to some extent temporally.

In the above embodiments, the output partitions are calculated at the substantially the same time. However, in other embodiments, the partitions are not determined at the same time. For example, the equivalence classes may be derived incrementally, so that equivalences with highest membership are generated first, followed by equivalences with lower membership.

Figure 7 is a process flow chart showing certain steps of a further classification process performed by the classification apparatus 200, in which equivalence classes may be derived incrementally.

At step s700, the first lattice 400 is generated and sent to the lattice processing module 208. In this embodiment, this is performed in the same way as in steps s300-s308 of Figure 3, which are described in more detail earlier above.

At step s702, the second subset of attributes is identified. In this embodiment, this is performed in the same way as in steps s310 of Figure 3, which is described in more detail earlier above.

At step s704, the lattice processing module 208 determines the possible values of the attributes in the second subset, and their respective frequencies.

For example, using the 2nd and 3rd columns of Table 1, the lattice processing module 208 determines Table 4:

Table 4

| sw-none | sw-sw | ccs-sw | ccs-ccs | ccm-ccs |
|---|---|---|---|---|
| 5 | 1 | 1 | 1 | 1 |

Where the first row of Table 4 records the possible values of the attributes in the second subset, and the second row of Table 4 records the frequencies of those attributes.

At step s706, the lattice processing module 208 creates an attribute similarity table for attributes in the second subset, in which all cells are initialised to zero. In other words, the lattice processing module 208 generates Table 5:

Table 5

| | sw-n | sw-sw | ccs-sw | ccs-ccs | ccm-ccs |
|---|---|---|---|---|---|
| sw-n | 0 | 0 | 0 | 0 | 0 |
| sw-sw | 0 | 0 | 0 | 0 | 0 |
| ccs-sw | 0 | 0 | 0 | 0 | 0 |
| ccs-ccs | 0 | 0 | 0 | 0 | 0 |
| ccm-ccs | 0 | 0 | 0 | 0 | 0 |

At step s708, a confidence threshold value is set. In this embodiment, this is performed in the same way as in steps s314 of Figure 3, which is described in more detail earlier above.

At step s710, the lattice processing module 208 updates the cells of the attribute similarity table (Table 5) as follows.

In this embodiment, the lattice processing module 208 processes the first lattice 400 on a concept by concept basis. A concept is processed by replacing the objects (b1, b2, ...) in that reduced concept label with the attribute values from the second subset. For a concept, a count of the number of times each of the attribute values occurs in that concept is maintained. For a concept, and for each attribute value in that concept, the count for that attribute value is divided by the frequency value of that attribute (Table 4) calculated in the preliminary step s704. The resulting values are then compared to the threshold value specified at step s708. For a concept, if the calculated value for the attributes of that concept is above the association threshold, the upper bound of the x-mu interval from the reduced concept label for those attributes is entered into the attribute similarity table (Table 5) for those attributes (if larger than the existing entry). However, if the calculated value for the attributes is below the association threshold, no values are entered into the attribute similarity table (Table 5).

The resulting table is the same as Table 3, determined at step s320 of Figure 3, which is described in more detail earlier above. However, the resulting table has been constructed incrementally, by processing the first lattice 400 concept by concept.

At step s712, the classification apparatus 200 derives possible partitions for the data set 214 from the resulting table, and provides the partitions as the output 218. In this embodiment, this is performed in the same way as in steps s320 and s322 of Figure 3, which are described in more detail earlier above.

Thus, a further classification process is provided.

Some embodiments of the present invention are described with respect to assessing building data. However, in alternative embodiments, other data which may be representative of one or more different entities other than buildings may be processed. In alternative embodiments entities can include computer systems, network attached devices, network endpoints, software applications, computer programs or software agents for example such that typical behaviours of such entities are modelled in order to identify behaviour and/or events departing from behaviour. For example, typical network traffic generated by a network-attached computer system or software application can be processed to evaluate security rules and the like for attack detection and/or to determine an insecure state of system operation. In some embodiments, data generated by communications facilities such as telephony facilities including telephone call information, short message service information, mobile or wireless data service information such as call, message or communication times, types, durations, volumes, frequencies, contents and the like can be processed by methods of embodiments of the present invention.

Insofar as embodiments of the invention described are implementable, at least in part, using a software-controlled programmable processing device, such as a microprocessor, digital signal processor or other processing device, data processing apparatus or system, it will be appreciated that a computer program for configuring a programmable device, apparatus or system to implement the foregoing described methods is envisaged as an aspect of the present invention. The computer program may be embodied as source code or undergo compilation for implementation on a processing device, apparatus or system or may be embodied as object code, for example.

Suitably, the computer program is stored on a carrier medium in machine or device readable form, for example in solid-state memory, magnetic memory such as disk or tape, optically or magneto-optically readable memory such as compact disk or digital versatile disk etc., and the processing device utilises the program or a part thereof to configure it for operation. The computer program may be supplied from a remote source embodied in a communications medium such as an electronic signal, radio frequency carrier wave or optical carrier wave. Such carrier media are also envisaged as aspects of the present invention.

It will be understood by those skilled in the art that, although the present invention has been described in relation to the above described example embodiments, the invention is not limited thereto and that there are many possible variations and modifications which fall within the scope of the invention.

The scope of the present invention includes any novel features or combination of features disclosed herein. The applicant hereby gives notice that new claims may be formulated to such features or combination of features during prosecution of this application or of any such further applications derived therefrom. In particular, with reference to the appended claims, features from dependent claims may be combined with those of the independent claims and features from respective independent claims may be combined in any appropriate manner and not merely in the specific combinations enumerated in the claims.

**Claims**

1. Apparatus for clustering a plurality of entities or events, the apparatus comprising one or more processors configured to:

   receive a data set representing the plurality of entities or events, the data set specifying, for each entity or event in the plurality of entities or events, a value of each attribute in a plurality of attributes;
   acquire a first partition, wherein the first partition groups the entities or events according to the values for the entities or events of a first subset of the attributes; and,
   using the first partition, determine a second partition, wherein the second partition groups the entities or events according to the values for the entities or events of a second subset of the attributes, and wherein the first subset is different to the second subset.

2. Apparatus according to claim 1, wherein the first partition is a fuzzy partition groups that specifies, for each entity or event and for each group in the first partition, a membership value of that entity or event in that group.

3. Apparatus according to claim 2, wherein the one or more processors are configured to:

   using the first partition, determine graded equivalence classes for the entities or events at a plurality of different membership levels;
   determine a lattice structure representative of a hierarchy of the equivalence classes; and,
   using the determined lattice structure, determine the second partition.

4. Apparatus according to claim 3 dependent on claim 2, wherein the one or more processors are configured to:

   determine x-mu reduced labelling for the graded equivalence classes; and
   determine the lattice structure using the determined x-mu reduced labelling.

5. Apparatus according to claim 3 or 4, wherein the one or more processors are configured to:

   project the lattice structure onto the attributes in the second subset, thereby producing a further lattice structure; and,
   using the further lattice structure, determine the second partition.

6. Apparatus according to claim 5, wherein the one or more processors are configured to project the lattice structure onto the attributes in the second subset by, for each entity or event, replacing all occurrences of that entity or event in the lattice structure with the attribute values of the second subset of attributes of that entity or event.

7. Apparatus according to claim 5 or 6, wherein the one or more processors are configured to:

    determine, for each equivalence class defined by the further lattice structure, a confidence value;
    for each equivalence class defined by the further lattice structure, compare the confidence value determined for that equivalence class to a threshold value; and
    remove, form the further lattice structure, each equivalence class of the further lattice structure that has a confidence value below the threshold value.

8. Apparatus according to any of claims 1 to 7, wherein the apparatus further comprises a user interface, and the one or more processors are configured to receive the threshold value from the user interface.

9. Apparatus according to any of claims 1 to 8, wherein the first subset and the second subset are disjoint subsets.

10. Apparatus according to any of claims 1 to 9, wherein the first subset includes one or more attributes having numerical values, and the second subset includes one or more attributes having non-numerical values.

11. Apparatus according to any of claims 1 to 10, wherein the entities are physical entities, and the events are behaviours, actions, or changes relating to one or more physical entities.

12. Apparatus according to any of claims 1 to 11, wherein the attributes in the first subset are commensurable with the attributes in the second subset.

13. A method for clustering a plurality of entities or events, the method comprising:

    receiving a data set representing the plurality of entities or events, the data set specifying, for each entity or event in the plurality of entities or events, a value of each attribute in a plurality of attributes;
    acquiring a first partition, wherein the first partition groups the entities or events according to the values for the entities or events of a first subset of the attributes; and,
    using the first partition, determining a second partition, wherein the second partition groups the entities or events according to the values for the entities or events of a second subset of the attributes, and wherein the first subset is different to the second subset.

14. A program or plurality of programs arranged such that when executed by a computer system or one or more processors it/they cause the computer system or the one or more processors to operate in accordance with the method claim 13.

15. A machine readable storage medium storing a program or at least one of the plurality of programs according to claim 14.

# FIGURE 1

| CPU 102 | STORAGE 104 | I/O 106 |
|---------|-------------|---------|

BUS 108

# FIGURE 2

FUZZY CLASSIFICATION APPARATUS 200

PROCESSOR 202

INPUT 212

DATASET 214

EQUIVALENCE CLASS INFORMATION 216

CLASSIFICATION MODULE 204

LATTICE GENERATION MODULE 206

LATTICE PROCESSING MODULE 208

PARTITION DETERMINATION MODULE 210

OUTPUT 218

# FIGURE 3

START

s300 — Acquire Input

s302 — Generate Initial Set of Graded Equivalence Classes

s304 — Send initial set of graded Equivalence Classes

s306 — Generate First Lattice

s308 — Send First Lattice

s310 — Identify second subset of Entity Attributes

s312 — Project first lattice onto second subset of entity attributes to generate second lattice

s314 — Set confidence threshold value

s316 — Apply confidence threshold to second lattice to generate third lattice

s318 — Determine new set of clusters

s320 — Provide Output

STOP

FIGURE 4

EP 3 330 868 A1

FIGURE 5

EP 3 330 868 A1

**FIGURE 6**

sw-n/(0.8, 1]

sw-n/(0.5, 0.8]   ccs-sw/(0.5, 1]   ccs-ccs/(0.5, 1], ccm-ccs/(0.5, 1]   sw-sw/(0, 1]

sw-n/(0, 0.5], ccs-sw/(0, 0.5], ccs-ccs/(0, 0.5], ccm-ccs/(0, 0.5]

**FIGURE 7**

START

s700 — Generate first lattice

s702 — Identify second subset of entity attributes

s704 — Determine values and value frequencies of second subset of entity attributes

s706 — Create initialised attribute similarity table

s708 — Set confidence threshold value

s710 — Update cells of attribute similarity table

s712 — Determine new set of clusters and provide as output

STOP

Europäisches
Patentamt

European
Patent Office

Office européen
des brevets

# EUROPEAN SEARCH REPORT

Application Number

EP 16 20 2205

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/271278 A1 (ACHARYA CHIRANJIT [US]) 22 November 2007 (2007-11-22) * paragraph [0028] - paragraph [0030]; figure 1 * * paragraph [0067] - paragraph [0070]; figure 6 * ----- | 1-15 | INV. G06F17/30 G06K9/62 |
| X | WO 2016/043846 A2 (HRL LAB LLC [US]; O'BRIEN MICHAEL J [US]; BENVENUTO JAMES [US]; BHATTA) 24 March 2016 (2016-03-24) * paragraph [0073]; figure 5 * ----- | 1-15 | |

TECHNICAL FIELDS
SEARCHED      (IPC)

G06F
G06K

The present search report has been drawn up for all claims

| Place of search | Date of completion of the search | Examiner |
|---|---|---|
| Berlin | 9 June 2017 | Polzer, Andreas |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.......................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 16 20 2205

This annex lists the patent family members relating to the patent documents cited in the above-mentioned European search report.
The members are as contained in the European Patent Office EDP file on
The European Patent Office is in no way liable for these particulars which are merely given for the purpose of information.

09-06-2017

| Patent document cited in search report | Publication date | Patent family member(s) | Publication date |
|---|---|---|---|
| US 2007271278 A1 | 22-11-2007 | NONE | |
| WO 2016043846 A2 | 24-03-2016 | CN 106575380 A | 19-04-2017 |
| | | EP 3172701 A2 | 31-05-2017 |
| | | WO 2016043846 A2 | 24-03-2016 |

EPO FORM P0459

For more details about this annex : see Official Journal of the European Patent Office, No. 12/82